# EUROPEAN PATENT APPLICATION

(11) **EP 4 694 112 A1**
(43) Date of publication of application: **11.02.2026**
(21) Application number: 24778727.8
(22) Date of filing: 09.02.2024
(51) Int. Cl.: H04N 13/366, G06F 3/01, G06F 3/0346, G06T 7/20, G06T 7/70, G06V 40/16, H04N 13/302

(54) **INFORMATION PROCESSING DEVICE AND INFORMATION PROCESSING METHOD**

(30) Priority: 24.03.2023 JP 2023048143
(71) Applicant: Sony Group Corporation, Tokyo 108-0075 (JP)
(72) Inventor: HORIKAWA, Masamoto, Tokyo 108-0075 (JP); AKAO, Masato, Tokyo 108-0075 (JP); MYOKAN, Yoshihiro, Tokyo 108-0075 (JP); NISHIBORI, Kazuhiko, Tokyo 108-0075 (JP)
(74) Representative: D Young & Co LLP
(86) International application number: PCT/JP2024/004461
(87) International publication number: WO 2024/202582

(57) **Abstract**

An information processing apparatus includes a control unit. The control unit acquires a camera image from a camera whose relative position with respect to a stereoscopic display is fixed. The control unit executes an estimation process to estimate a position/orientation of a face of a user viewing the stereoscopic display, on the basis of the camera image. The control unit controls the stereoscopic display to display a stereoscopic image according to a change in the position/orientation of the face of the user. The control unit changes a frequency of update of the stereoscopic display when a frequency of update of the estimation process changes.

## Description

### Field

The present disclosure relates to an information processing apparatus and an information processing method.

### Background

A conventional technology is known to stereoscopically display a virtual object to be displayed as if the virtual object were in a real space. For example, a stereoscopic display has been proposed in which a real space is defined as a light field including an infinite number of light rays, and light rays reaching the left and right eyes of a user from the virtual object are reproduced in real time according to viewpoint positions of the user (e.g., see Patent Literature 1).

In this stereoscopic display, the positions of the left and right eyes of the user are estimated by tracking using a camera, and a stereoscopic image as a group of parallax images directed to the left and right eyes at the estimated positions, is calculated/rendered in real time, thereby enabling stereoscopic display.

### Citation List

### Patent Literature

Patent Literature 1: WO 2021/124709 A1

### Summary

### Technical Problem

However, the above-described prior art has room for further improvement in efficient operation of the stereoscopic display.

For example, in calculating/rendering the stereoscopic image, estimation of the viewpoint positions may be late for the actual movement of the positions of the left and right eyes. In this way, when a frequency of update of the position/orientation of a face estimated by tracking changes, the stereoscopic display operating at a constant refresh rate may be inefficiently operated for the calculation/rendering of the stereoscopic image.

Therefore, the present disclosure proposes an information processing apparatus and an information processing method that enable efficient operation of a stereoscopic display.

### Solution to Problem

In order to solve the above problems, one aspect of an information processing apparatus according to the present disclosure includes a control unit. The control unit acquires a camera image from a camera whose relative position with respect to a stereoscopic display is fixed. The control unit executes an estimation process to estimate a position/orientation of a face of a user viewing the stereoscopic display, based on the camera image. The control unit controls the stereoscopic display to display a stereoscopic image according to a change in the position/orientation of the face of the user. The control unit changes a frequency of update of the stereoscopic display when a frequency of update of the estimation process changes.

### Brief Description of Drawings

FIG. 1 is a schematic explanatory diagram (1) of an image processing method according to an embodiment of the present disclosure.
FIG. 2 is a schematic explanatory diagram (2) of the image processing method according to an embodiment of the present disclosure.
FIG. 3 is a block diagram illustrating an exemplary configuration of an image processing apparatus according to an embodiment of the present disclosure.
FIG. 4 is an explanatory diagram (1) of an image processing method performed by the image processing apparatus.
FIG. 5 is an explanatory diagram (2) of the image processing method performed by the image processing apparatus.
FIG. 6 is an explanatory diagram (3) of the image processing method performed by the image processing apparatus.
FIG. 7 is a flowchart illustrating a process procedure performed by the image processing apparatus.
FIG. 8 is an explanatory diagram of an image processing method performed by an image processing apparatus according to a first modification.
FIG. 9 is an explanatory diagram of an image processing method performed by an image processing apparatus according to a second modification.
FIG. 10 is a hardware configuration diagram illustrating an example of a computer implementing the functions of an image processing apparatus.

### Description of Embodiments

Embodiments of the present disclosure will be described below in detail with reference to the drawings. Note that in the following embodiments, the same portions are denoted by the same reference numerals, and the description thereof will not be repeated.

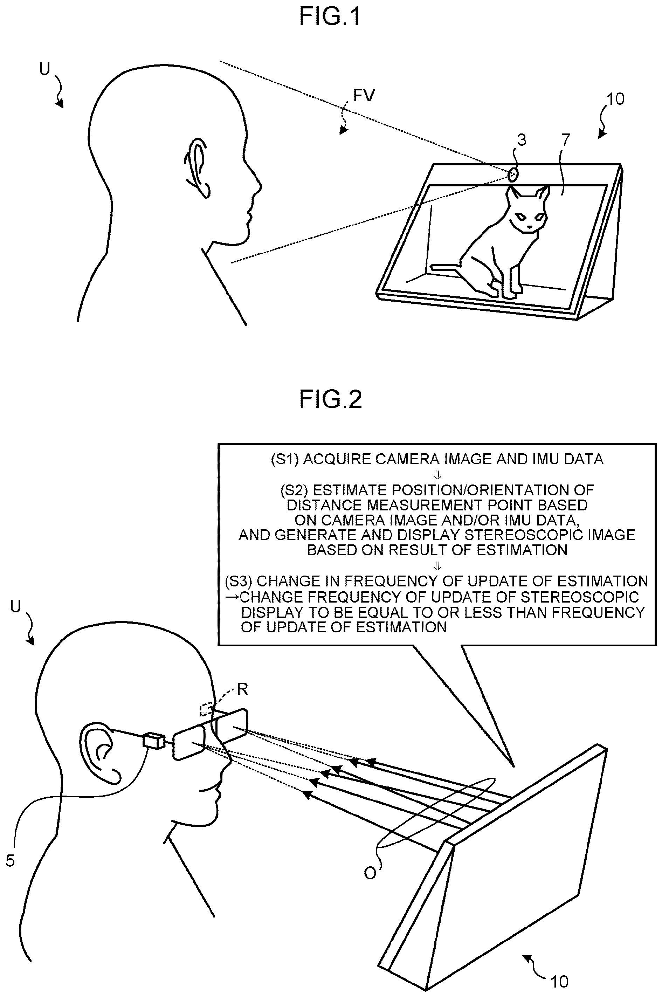

Furthermore, in the following description, it is assumed that an information processing apparatus according to an embodiment of the present disclosure (hereinafter, appropriately referred to as "the present embodiment") is an image processing apparatus 10 illustrated in FIG. 1 and subsequent drawings. Furthermore, in the following description, it is assumed that an information processing method according to the present embodiment is an image processing method performed by the image processing apparatus 10.

Furthermore, the present disclosure will be described in the order of items shown below.
1. Overview
2. Exemplary configuration of image processing apparatus
3. Process procedure
4. Modifications
4-1. First modification
4-2. Second modification
4-3. Others
5. Hardware configuration
6. Conclusion

### <<1. Overview>>

FIG. 1 is a schematic explanatory diagram (1) of an image processing method according to an embodiment of the present disclosure. Furthermore, FIG. 2 is a schematic explanatory diagram (2) of the image processing method according to an embodiment of the present disclosure.

As illustrated in FIG. 1, the image processing apparatus 10 according to the present embodiment includes a camera 3 and a stereoscopic display 7. The camera 3 is provided so as to be capable of imaging a face of a user U at a predetermined angle of view FV, and the position of the camera 3 is fixed relative to the position of the stereoscopic display 7. The stereoscopic display 7 stereoscopically displays a virtual object to be displayed so that the user U is allowed to visually recognize a virtual object as if the virtual object were in a real space. Note that the configuration of the present embodiment is not limited to the configuration in which the camera 3 is directly fixed to the housing of the image processing apparatus 10. For example, the camera 3 may be configured to be separately fixed at a position separated from the image processing apparatus 10 and communicate with the image processing apparatus 10 in a wired or wireless manner.

In the stereoscopic display 7, a light distribution member such as a lenticular lens or a parallax barrier is mounted on a display panel with pixels arranged, and has openings provided to give directivity to light rays emitted from the pixels.

Use of the directivity enables the image processing apparatus 10 to cause the stereoscopic display 7 to separately display different images for the left and right eyes of the user U. Therefore, when the image processing apparatus 10 causes the stereoscopic display 7 to displays a group of parallax images corresponding to a parallax between the left and right eyes of the user U, the user U is allowed to stereoscopically view the virtual object.

As illustrated in FIG. 2, the image processing apparatus 10 reproduces light rays O reaching the left and right eyes of the user U from the virtual object, in real time according to the viewpoint positions of the user U.

Specifically, the image processing apparatus 10 estimates left and right viewpoint positions of the user U by tracking using the camera 3, and calculates/renders a stereoscopic image toward each of the estimated viewpoint positions, in real time.

Note that the image processing apparatus 10 sets a specific portion of the face of the user U as a distance measurement point R to estimate the three-dimensional position/orientation of the distance measurement point R by tracking using the camera 3 and estimate the left and right viewpoint positions of the user U on the basis of a result of the estimation. The distance measurement point R is set, for example, between the eyebrows or the like of the user U. The distance measurement point R may be a marker fixed to the face of the user U.

Incidentally, during tracking or calculation/rendering of the stereoscopic image, the estimation of the distance measurement point R may be late for the actual movement of the face of the user U. When such a delay occurs, the feeling of the user U is impaired, which becomes a problem. In order to solve such a problem, for example, a method of combining a result of detection of another sensor with the tracking using the camera 3 can be considered.

Therefore, as illustrated in FIG. 2, in the image processing method according to the present embodiment, the image processing apparatus 10 associate, for example, an inertial measurement unit (IMU) 5 with the tracking using the camera 3. The IMU 5 is a device that measures three-dimensional inertial motion, and is configured to acquire the acceleration and angular velocity of the IMU 5 itself more frequently than the tracking of the camera 3. In other words, the IMU 5 enables sensing with less delay than the tracking by the camera 3. Note that, hereinafter, measurement data including the acceleration and angular velocity measured by the IMU 5 will be appropriately referred to as "IMU data".

In the image processing method according to the present embodiment, the IMU 5 is mounted to any position of the head of the user U, for cooperation with tracking by the camera 3. The IMU 5 does not select a mounted position or a mounted form thereof with respect to the head of the user U.

For example, the IMU 5 may be formed into a shape of a clip or the like so as to be mounted to glasses or the like. In addition, the IMU 5 may be formed into a shape of a hairclip or the like so as to be mounted to the hair of the user U. In addition, the IMU 5 may be provided as eyeglasses in advance so as to be mounted to the user U by being worn. Furthermore, the IMU 5 may be built into a wearable device, such as a smart glass, an earphone, or a headset so that the IMU 5 is mounted on the user U when this wearable device is worn by the user U. Note that FIG. 2 illustrates an example in which the IMU 5 is mounted to glasses.

The image processing apparatus 10 adds a result of estimation of the position/orientation of the IMU 5 based on of the IMU data from the IMU 5, to the result of the estimation of the position/orientation of the distance measurement point R based on a camera image, and estimates a final position/orientation of the distance measurement point R necessary for the stereoscopic display.

For example, when the face of the user U is not visible in the angle of view FV and tracking of the face of the user U is lost, the image processing apparatus 10 estimates the final position/orientation of the distance measurement point R, on the basis of the result of the estimation of the position/orientation of the IMU 5 based on the IMU data.

Furthermore, for example, when the accuracy of a relative position/orientation is low, between the position/orientation of the distance measurement point R based on the camera image and the position/orientation of the IMU 5 based on the IMU data, the image processing apparatus 10 estimates the final position/orientation of the distance measurement point R, on the basis of the position/orientation of the distance measurement point R based on the camera image.

Furthermore, for example, when the accuracy is equal to or larger than a predetermined threshold, the image processing apparatus 10 reflects the result of the estimation based on the IMU data in the position/orientation of the distance measurement point R based on the camera image according to the accuracy.

The image processing apparatus 10 combines the results of the estimation based on the IMU data updated more frequently than the tracking by the camera 3 to reduce the possibilities of occurrence of the delay.

Meanwhile, change of the combination with the sensor used for estimation of the position/orientation of the distance measurement point R by the image processing apparatus 10 may make the operation of the stereoscopic display 7 inefficient.

For example, when the camera 3 having a frame rate of 60 Hz and the IMU 5 having a data update rate of 300 Hz are combined, the image processing apparatus 10 is allowed to estimate the position/orientation of the distance measurement point R with a maximum period of 300 Hz.

In this configuration, it is considered that the stereoscopic image generated based on the result of the estimation of the position/orientation of the distance measurement point R is caused to be displayed on the stereoscopic display 7 whose refresh rate is 144 Hz.

When the image processing apparatus 10 generates the stereoscopic image by using, for example, only the result of the estimation based on the camera image and causes the stereoscopic display 7 to display the stereoscopic image, the result of the estimation based on the camera image is updated at 60 Hz.

However, the stereoscopic display 7 updates display contents at a refresh rate of 144 Hz, the display contents may be updated inefficiently, even though the result of the estimation based on the camera image is not updated. In addition, even when the stereoscopic image to be displayed on the stereoscopic display 7 is calculated, the same problem may occur unless the real-time calculation frequency is appropriately set according to the position/orientation of the distance measurement point R. Note that here, the "calculation frequency" may be replaced with "frequency of update of the stereoscopic image".

Therefore, in the image processing method according to the present embodiment, the image processing apparatus 10 acquires the camera image from the camera 3 whose relative position with respect to the stereoscopic display 7 is fixed, performs an estimation process to estimate the position/orientation of the face of the user U viewing the stereoscopic display 7, on the basis of the camera image, controls the stereoscopic display 7 to display the stereoscopic image according to the change in the position/orientation of the face of the user U, and changes a frequency of update of the stereoscopic display 7 when the frequency of update of the estimation process changes.

Specifically, as illustrated in FIG. 2, in the image processing method according to the present embodiment, the image processing apparatus 10 acquires the camera image and the IMU data (Step S1). Then, the image processing apparatus 10 estimates the position/orientation of the distance measurement point R on the basis of the camera image and/or the IMU data, and generates the stereoscopic image on the basis of the result of the estimation, for display (Step S2).

Note that, in Step S2, the image processing apparatus 10 appropriately changes the combination with the sensor used for the estimation of the position/orientation of the distance measurement point R, depending on the non-visibility in the angle of view FV described above, the accuracy of the relative position/orientation, and the like. The frequency of update of the estimation of the position/orientation changes according to the change of the combination with the sensor. The "frequency of update of the estimation" may be replaced with "frequency of update of the estimation process".

Therefore, when the frequency of update of the estimation changes, the image processing apparatus 10 changes the frequency of update (i.e., the refresh rate) of the stereoscopic display 7 to be equal to or less than the frequency of update of the estimation (Step S3). For example, when the frequency of update of the estimation decreases, the image processing apparatus 10 decreases the frequency of update of the stereoscopic display 7 to be equal to or less than the decreased frequency of update of the estimation.

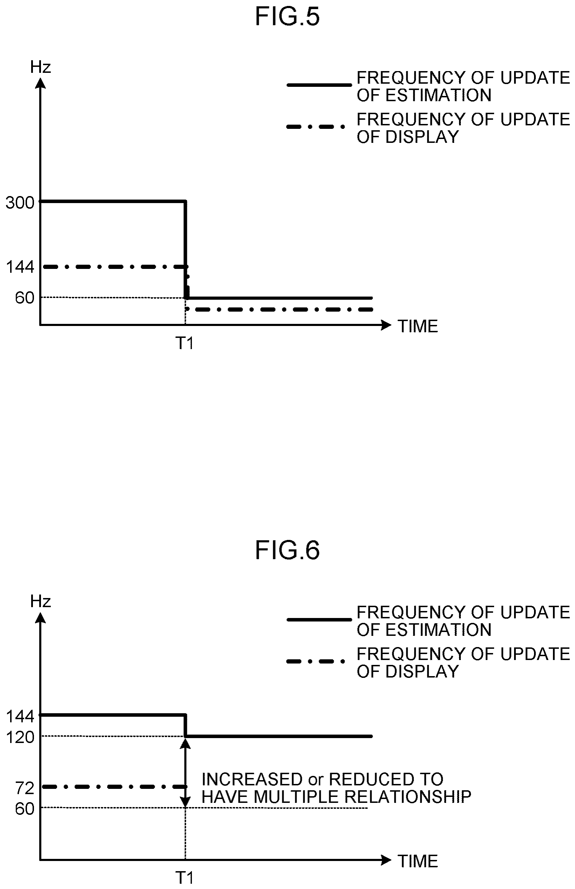

As a result, it is possible to efficiently operate the stereoscopic display 7 according to the change in the frequency of update of the estimation. Note that the image processing apparatus 10 changes the frequency of update of the stereoscopic display 7 to have, for example, a multiple relationship with the frequency of update of the estimation. A specific example of the change of the frequency of update will be described later with reference to FIG. 6.

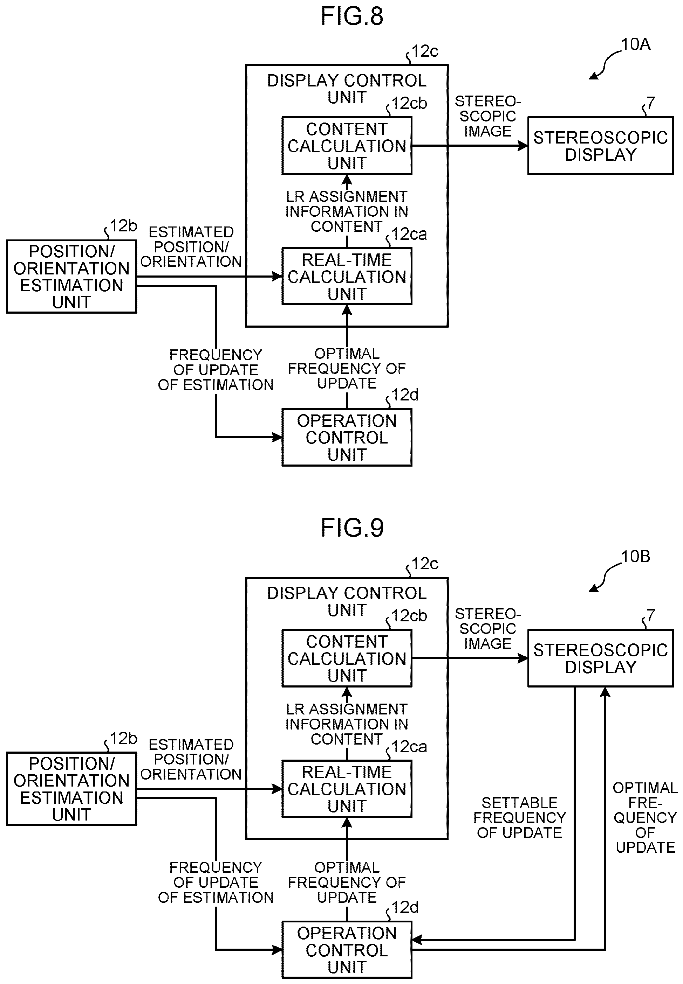

Furthermore, the image processing apparatus 10 changes, for example, the calculation frequency for calculation of the stereoscopic image to be displayed on the stereoscopic display 7, according to the change in the frequency of update of the estimation. A specific example of the change of the calculation frequency will be described later with reference to FIGS. 8 and 9.

In this way, in the image processing method according to the present embodiment, the image processing apparatus 10 acquires the camera image from the camera 3 whose relative position with respect to the stereoscopic display 7 is fixed, performs the estimation process to estimate the position/orientation of the face of the user U viewing the stereoscopic display 7, on the basis of the camera image, controls the stereoscopic display 7 to display the stereoscopic image according to the change in the position/orientation of the face of the user U, and changes the frequency of update of the stereoscopic display 7 when the frequency of update of the estimation process changes.

Accordingly, the image processing method according to the present embodiment enables efficient operation of the stereoscopic display 7. Hereinafter, an exemplary configuration of the image processing apparatus 10 according to the present embodiment will be described more specifically. Note that hereinafter, the stereoscopic display 7 may be simply referred to as "display" in some cases.

### <<2. Exemplary configuration of image processing apparatus>>

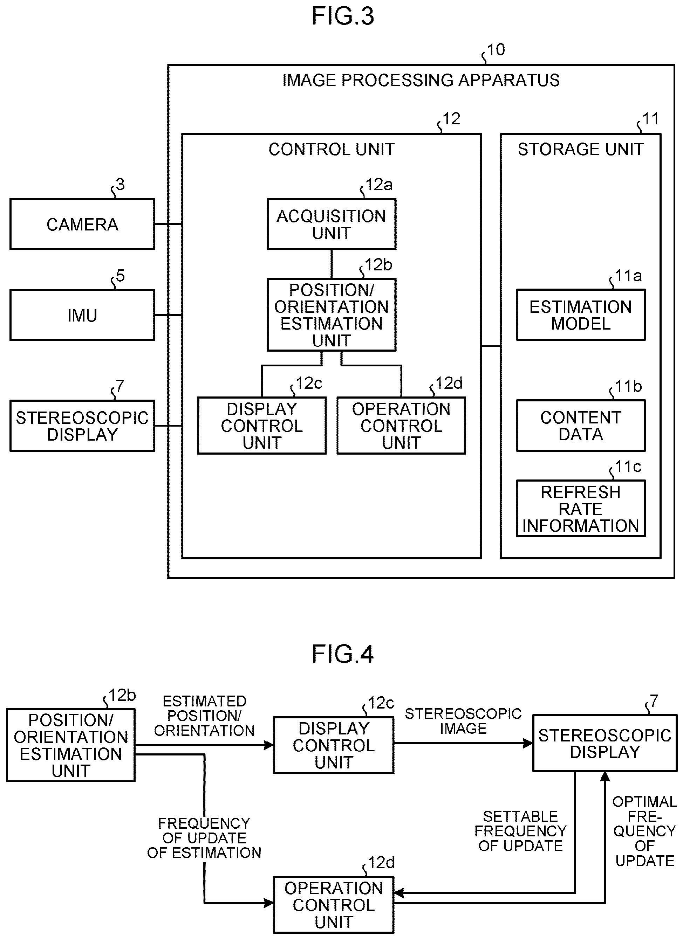

FIG. 3 is a block diagram illustrating an exemplary configuration of the image processing apparatus 10 according to an embodiment of the present disclosure. Note that FIG. 3 illustrates only component elements necessary for description of the features of an embodiment of the present disclosure, and general component elements are not described.

In other words, the component elements illustrated in FIG. 3 show a functional concept and are not necessarily physically configured as illustrated. For example, specific forms of distribution or integration of the respective blocks are not limited to those illustrated, and all or some thereof can be configured by being functionally or physically distributed or integrated, in any units, according to various loads or usage conditions.

Furthermore, in a description with reference to FIG. 3, component elements having already been described are simply described or not described in some cases.

As illustrated in FIG. 3, the image processing apparatus 10 includes a storage unit 11 and a control unit 12. In addition, the camera 3, the IMU 5, and the stereoscopic display 7 are connected to the image processing apparatus 10. The image processing apparatus 10 is connected to the camera 3, the IMU 5, and the stereoscopic display 7 in a wired or wireless manner.

The camera 3, the IMU 5, and the stereoscopic display 7, which have been described, are not described here.

The storage unit 11 is implemented by, for example, a storage device such as a random access memory (RAM), a read only memory (ROM), a flash memory, or a hard disk drive (HDD). In the example of FIG. 3, the storage unit 11 stores an estimation model 11a, content data 11b, and refresh rate information 11c. In addition, the storage unit 11 stores a program according to the present embodiment, which is not illustrated.

The estimation model 11a is a model that is used in a position/orientation estimation process performed by a position/orientation estimation unit 12b, which is described later. For example, the estimation model 11a is a mathematical model including an equation that holds when a relative position/orientation between the distance measurement point R and the IMU 5 is correctly estimated (see "Monocular Visual-Inertial State Estimation With Online Initialization and Camera-IMU Extrinsic Calibration" and [Zhenfei, 2017]). The position/orientation estimation unit 12b evaluates errors of such an equation to estimate the relative position/orientation between the distance measurement point R and the IMU 5 and the accuracy thereof.

Furthermore, for example, the estimation model 11a may be a learning model trained by using an algorithm such as deep learning so that the relative position/orientation and the accuracy thereof based on inputs of the position/orientation of the distance measurement point R, the position/orientation of the IMU 5, and the like are output.

The content data 11b is data including a virtual object group to be displayed on the stereoscopic display 7.

The refresh rate information 11c is information in which the frequency of update settable for the stereoscopic display 7 is defined.

The control unit 12 is a controller, and is implemented, for example, by executing a program according to the present embodiment stored in the storage unit 11, by a central processing unit (CPU), a micro processing unit (MPU), a graphics processing unit (GPU), or the like, with the RAM as a working area. In addition, the control unit 12 is allowed to be implemented by an integrated circuit such as an application specific integrated circuit (ASIC) or a field programmable gate array (FPGA).

The control unit 12 includes an acquisition unit 12a, the position/orientation estimation unit 12b, a display control unit 12c, and an operation control unit 12d to implement or execute the functions and operations of information processing, which are described below.

The acquisition unit 12a acquires the camera image captured by the camera 3, from the camera 3. In addition, the acquisition unit 12a acquires the IMU data measured by the IMU 5, from the IMU 5.

The position/orientation estimation unit 12b performs the position/orientation estimation process (corresponding to an example of the "estimation process") to estimate the position/orientation of the distance measurement point R on the basis of one or both of the camera image and the IMU data that are acquired by the acquisition unit 12a.

Specifically, the position/orientation estimation unit 12b performs a face recognition process to recognize the face of the user U on the basis of the camera image acquired by the acquisition unit 12a. In the face recognition process, the position/orientation estimation unit 12b estimates the position/orientation of a predetermined distance measurement point R on the face of the user U, on the basis of the camera image. Note that the position/orientation estimation unit 12b updates the position/orientation of the distance measurement point R at a lower frequency than that in the position/orientation estimation process for the IMU 5.

In addition, the position/orientation estimation unit 12b estimates the position/orientation of the IMU 5 on the basis of the IMU data acquired by the acquisition unit 12a. Note that the position/orientation estimation unit 12b updates the position/orientation of the IMU 5 more frequently than that in the position/orientation estimation process for the distance measurement point R by the face recognition process.

In addition, when both the result of the estimation of the position/orientation of the distance measurement point R based on the camera image and the result of the estimation of the position/orientation of the IMU 5 based on the IMU data are updated, the position/orientation estimation unit 12b uses both of the results of the estimations to estimate the relative position/orientation between the distance measurement point R and the IMU 5. As described above, the position/orientation estimation unit 12b evaluates, for example, errors of the above-described equation included in the estimation model 11a to estimate the relative position/orientation between the distance measurement point R and the IMU 5 and the accuracy thereof.

In addition, the position/orientation estimation unit 12b integrates the result of the estimation based on the camera image and the result of the estimation based on the IMU data, and outputs the final position/orientation of the distance measurement point R to the display control unit 12c. The position/orientation estimation unit 12b uses the relative position/orientation described above to convert the result of the estimation based on the IMU data into the position/orientation of the distance measurement point R.

In addition, the position/orientation estimation unit 12b determines a degree of reflection of, for example, the result of the estimation based on the IMU data in the final position/orientation of the distance measurement point R, on the basis of the accuracy described above.

For example, when the accuracy is less than the predetermined threshold, the position/orientation estimation unit 12b estimates the final position/orientation of the distance measurement point R by using only the result of the estimation based on the camera image without using the result of the estimation based on the IMU data, and outputs the result of the estimation to the display control unit 12c.

Furthermore, for example, when the accuracy is equal to or larger than the predetermined threshold value, the position/orientation estimation unit 12b determines the degree of reflection of the result of the estimation based on the IMU data in the final position/orientation of the distance measurement point R, according to the accuracy. Then, a distance measurement point estimation unit 12e estimates the final position/orientation of the distance measurement point R by using both the result of the estimation based on the camera image and the result of the estimation based on the IMU data according to the degree, and outputs the result of the estimation to the display control unit 12c.

In addition, when the accuracy is high, the position/orientation estimation unit 12b estimates the final position/orientation of the distance measurement point R by using only the result of the estimation based on the IMU data, and outputs the result of the estimation to the display control unit 12c, even when the position/orientation of the distance measurement point R cannot be estimated from the camera image because the face of the user U is not visible in the angle of view FV.

Furthermore, the position/orientation estimation unit 12b outputs the frequency of update of the estimation, to the operation control unit 12d.

The display control unit 12c estimates the left and right viewpoint positions of the user U, on the basis of the final position/orientation of the distance measurement point R output from the position/orientation estimation unit 12b, generates the stereoscopic image directed to the estimated viewpoint positions, and causes the stereoscopic display 7 to display the stereoscopic image.

The operation control unit 12d controls the operation of the stereoscopic display 7, on the basis of the frequency of update of the estimation that is output from the position/orientation estimation unit 12b. Specifically, the operation control unit 12d changes the frequency of update of the stereoscopic display 7, on the basis of the frequency of update of the estimation that is output from the position/orientation estimation unit 12b.

On the basis of the above description, the process of changing the frequency of update of the stereoscopic display 7, in the image processing method performed by the image processing apparatus 10 will be described more specifically, with reference to FIGS. 4 to 6. FIG. 4 is an explanatory diagram (1) of the image processing method performed by the image processing apparatus 10. Furthermore, FIG. 5 is an explanatory diagram (2) of the image processing method performed by the image processing apparatus 10. Furthermore, FIG. 6 is an explanatory diagram (3) of the image processing method performed by the image processing apparatus 10.

As illustrated in FIG. 4, the position/orientation estimation unit 12b outputs the estimated position/orientation to the display control unit 12c, and outputs the frequency of update of the estimation to the operation control unit 12d. The display control unit 12c generates the stereoscopic image on the basis of the estimated position/orientation and causes the stereoscopic display 7 to display the stereoscopic image.

The operation control unit 12d acquires the frequency of update that is settable on the stereoscopic display 7, and stores the frequency of update, as the refresh rate information 11c, in the storage unit 11 in advance. Furthermore, the operation control unit 12d sets an optimal frequency of update to the stereoscopic display 7, on the basis of the frequency of update of the estimation that is output from the position/orientation estimation unit 12b, and changes the frequency of update of the stereoscopic display 7.

As illustrated in FIG. 5, for example, when the frequency of update of the estimation changes from 300 Hz to 60 Hz at time point T1, the operation control unit 12d decreases the frequency of update of the display to 60 Hz or less, if the frequency of update of the display is 144 Hz. At this time, the operation control unit 12d selects a maximum frequency of update of, for example, 60 Hz or less, from among the update frequencies that are settable on the stereoscopic display 7 included in the refresh rate information 11c.

Furthermore, in another example, as illustrated in FIG. 6, the operation control unit 12d changes the frequency of update of the display to have, for example, the multiple relationship with the frequency of update of the estimation. When the frequency of update of the estimation changes from 144 Hz to 120 Hz at the time point T1, the operation control unit 12d increases the frequency of update of the display to, for example, 120 Hz or decreases to, for example, 60 Hz, in order to have, for example, the multiple relationship with the frequency of update of the estimation, if the frequency of update of the display is 72 Hz.

When the operation control unit 12d changes the frequency of update of the display to have the multiple relationship with the frequency of update of the estimation in this way, the stereoscopic display 7 is allowed to be efficiently operated. Furthermore, when the operation control unit 12d changes the frequency of update of the display to match the frequency of update of the estimation, as in the case of the frequency of update of the display increased to 120 Hz in FIG. 6, the stereoscopic display 7 is allowed to be operated more efficiently.

Note that FIGS. 5 and 6 each illustrate an example in which the frequency of update of the display is changed to be equal to or less than the frequency of update of the estimation, according to decrease of the frequency of update of the estimation, but the frequency of update of the display may be changed by a similar method according to increase of the frequency of update of the estimation.

In summary, when transition from a state in which the estimation process is performed on the basis of at least the IMU data to a state in which the estimation process is performed on the basis of only the camera image causes a reduction in the frequency of update of the estimation, the operation control unit 12d reduces the frequency of update of the stereoscopic display 7 to be equal to or less than the frequency of update of the estimation.

Alternatively, when transition from the state in which the estimation process is performed on the basis of only the camera image to the state in which the estimation process is performed on the basis of at least the IMU data increases the frequency of update of the estimation, the operation control unit 12d increases the frequency of update of the stereoscopic display 7 within a range of equal to or less than the frequency of update of the estimation.

Therefore, it is possible to efficiently operate the stereoscopic display 7 according to the change of decrease or increase of the frequency of update of the estimation.

### <<3. Process procedure>>

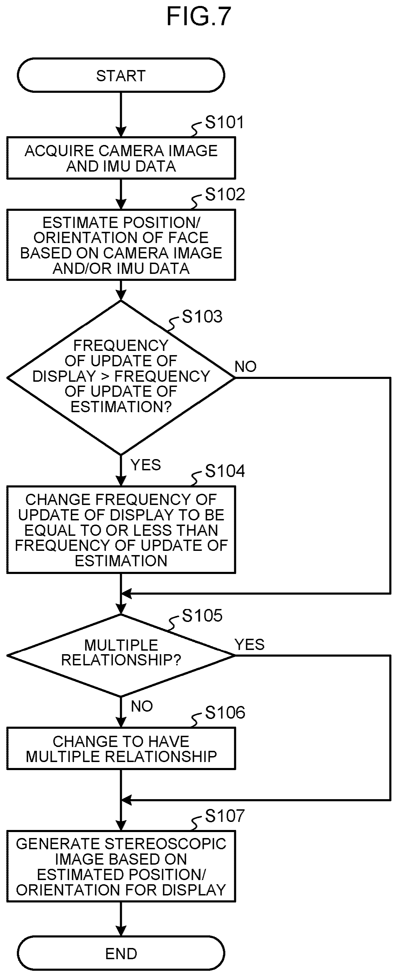

Next, a process procedure performed by the image processing apparatus 10 according to the present embodiment will be described with reference to FIG. 7. FIG. 7 is a flowchart illustrating the process procedure performed by the image processing apparatus 10. Note that in FIG. 7, the process procedure corresponds to one frame of the camera image.

The acquisition unit 12a acquires the camera image and the IMU data from the camera 3 and the IMU 5, respectively (Step S101). Then, the position/orientation estimation unit 12b estimates the position/orientation of the face (specifically, the position/orientation of the distance measurement point R) on the basis of the camera image and/or the IMU data (Step S102).

Then, the operation control unit 12d determines whether the frequency of update of the display exceeds the frequency of update of the estimation (Step S103).

When the frequency of update of the display exceeds the frequency of update of the estimation (Step S103, Yes), the operation control unit 12d changes the frequency of update of the display to be equal to or less than the frequency of update of the estimation (Step S104). When the frequency of update of the display does not exceed the frequency of update of the estimation (Step S103, No), the process proceeds to Step S105.

In Step S105, the operation control unit 12d determines whether the frequency of update of the display has the multiple relationship with the frequency of update of the estimation.

When there is no multiple relationship (Step S105, No), the operation control unit 12d changes the frequency of update of the display to have the multiple relationship (Step S106). when there is the multiple relationship (Step S105, Yes), the process proceeds to Step S107.

In Step S107, the display control unit 12c generates the stereoscopic image on the basis of the position/orientation estimated by the position/orientation estimation unit 12b, for display. Then, the process is finished.

### <<4. Modifications>>

Note that the embodiments of the present disclosure described above can include several modifications.

### <4-1. First modification>

FIG. 8 is an explanatory diagram of an image processing method performed by an image processing apparatus 10A according to a first modification. The image processing apparatus 10A according to the first modification is different from the image processing apparatus 10 in that the display control unit 12c further includes a real-time calculation unit 12ca and a content calculation unit 12cb.

Furthermore, in the image processing apparatus 10A, the operation control unit 12d controls the frequency of update of the stereoscopic image that is calculated by the display control unit 12c on the basis of the frequency of update of the estimation from the position/orientation estimation unit 12b.

On the basis of the position/orientation estimated by the position/orientation estimation unit 12b, the real-time calculation unit 12ca moves a camera in content according to the position of the face of the user U, and calculates, for each pixel of the stereoscopic display 7, whether an image directed to which of the left eye and the right eye is to be displayed so that an optimum stereoscopic image is displayed for the viewpoint positions of the user U. In addition, the real-time calculation unit 12ca outputs LR assignment information in the content that indicates to which of the left and right eyes the image is to be directed, to the content calculation unit 12cb,.

For example, the content calculation unit 12cb calculates the movement of the virtual object in the content, controls the movement of the virtual object on the basis of an input from the outside. In addition, the content calculation unit 12cb generates the stereoscopic image on the basis of the LR assignment information in the content from the real-time calculation unit 12ca.

Then, in the process of calculation by the real-time calculation unit 12ca, the calculation frequency should be updated according to the frequency of update of the estimation by the position/orientation estimation unit 12b. For example, it is considered that the position/orientation estimation unit 12b operates at a frequency of update of 300 Hz according to a combination of the camera 3 and the IMU 5, and the real-time calculation unit 12ca also operates at 300 Hz that matches the frequency of update of the position/orientation estimation unit 12b.

It is assumed that this state is shifted to a state in which only the camera 3 is used in the position/orientation estimation unit 12b to perform the estimation of the position/orientation, and the frequency of update of the estimation decreases to 60 Hz that is the same as the frame rate of the camera 3.

At this time, continuous operation of the real-time calculation unit 12ca at a calculation frequency of 300 Hz leads to inefficient calculation of the same volume with a rate of 4/5. Therefore, in the image processing apparatus 10A according to the first modification, when the frequency of update of the estimation by the position/orientation estimation unit 12b is changed, the operation control unit 12d sets a frequency of update matching the changed frequency of update, as the optimal frequency of update, for the real-time calculation unit 12ca, making calculation efficient.

### <4-2. Second modification>

FIG. 9 is an explanatory diagram of an image processing method performed by an image processing apparatus 10B according to a second modification. FIG. 9 corresponds to FIG. 8, and only differences from FIG. 8 will be described here.

As illustrated in FIG. 9, the image processing apparatus 10B according to the second modification is different from the image processing apparatus 10A in that, in addition to setting the optimal frequency of update for the real-time calculation unit 12ca, the operation control unit 12d controls the operation of the stereoscopic display 7 as in FIG. 4.

As described above, the operation control unit 12d simultaneously controls the operations of the display control unit 12c and the stereoscopic display 7 according to the frequency of update of the estimation by the position/orientation estimation unit 12b, thus enabling more efficient operations of the stereoscopic display 7 and the display control unit.

### <4-3. Others>

Furthermore, of the processes described in the above embodiments of the present disclosure, all or some of the processes described to be performed automatically may be performed manually, or all or some of the processes described to be performed manually may be performed automatically by a known method. In addition, the process procedures, specific names, and information including various data and parameters, which are described in the above description or illustrated in the drawings, can be appropriately changed unless otherwise specified. For example, various information illustrated in the drawings are not limited to the illustrated information.

Furthermore, the component elements of the devices are illustrated as functional concepts but are not necessarily required to be physically configured as illustrated. In other words, specific forms of distribution or integration of the devices are not limited to those illustrated, and all or some of the devices may be configured by being functionally or physically distributed or integrated in appropriate units, according to various loads or usage conditions.

Furthermore, the embodiments of the present disclosure described above can be appropriately combined within a range consistent with the contents of the processing. Furthermore, the orders of the steps illustrated in the sequence diagrams or flowcharts of the present embodiment can be changed appropriately.

### <<5. Hardware configuration>>

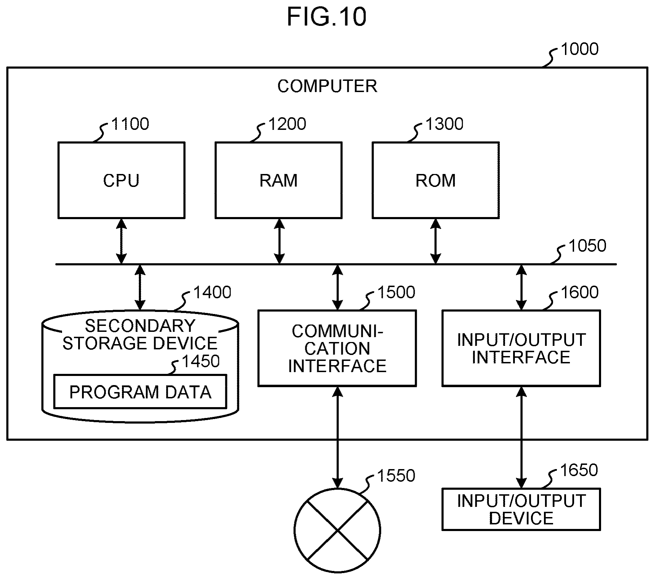

Furthermore, the image processing apparatuses 10, 10A, and 10B according to the embodiments of the present disclosure described above are implemented by, for example, a computer 1000 having a configuration as illustrated in FIG. 10. FIG. 10 is a hardware configuration diagram illustrating an example of the computer 1000 implementing the functions of the image processing apparatuses 10, 10A, and 10B. The computer 1000 includes a CPU 1100, a RAM 1200, a ROM 1300, a secondary storage device 1400, a communication interface 1500, and an input/output interface 1600. The respective units of the computer 1000 are connected by a bus 1050.

The CPU 1100 is operated on the basis of programs stored in the ROM 1300 or the secondary storage device 1400 to control the respective units. For example, the CPU 1100 deploys a program stored in the ROM 1300 or the secondary storage device 1400 to the RAM 1200, and performs processing corresponding to each of various programs.

The ROM 1300 stores a boot program, such as a basic input output system (BIOS), performed by the CPU 1100 when the computer 1000 is booted, a program depending on the hardware of the computer 1000, and the like.

The secondary storage device 1400 is a computer-readable recording medium that non-transitorily records a program performed by the CPU 1100, data used by the program, and the like. Specifically, the secondary storage device 1400 is a recording medium that records a program according to an embodiment of the present disclosure or a program according to a modification, which is an example of program data 1450.

The communication interface 1500 is an interface for connecting the computer 1000 to an external network 1550. For example, the CPU 1100 receives data from another device or transmits data generated by the CPU 1100 to another device, via the communication interface 1500.

The input/output interface 1600 is an interface for connecting an input/output device 1650 and the computer 1000. For example, the CPU 1100 receives data from an input device such as a keyboard or mouse via the input/output interface 1600. In addition, the CPU 1100 transmits data to an output device such as a display, speaker, or printer via the input/output interface 1600. Furthermore, the input/output interface 1600 may function as a media interface that reads a program or the like recorded on a predetermined recording medium. The medium includes, for example, an optical recording medium such as a digital versatile disc (DVD) or phase change rewritable disk (PD), a magneto-optical recording medium such as a magneto-optical disk (MO), a tape medium, a magnetic recording medium, a semiconductor memory, or the like.

For example, when the computer 1000 functions as the image processing apparatuses 10, 10A, and 10B, the CPU 1100 of the computer 1000 executes a program loaded on the RAM 1200 to implement a function of the control unit 12. In addition, the secondary storage device 1400 stores a program according to the present disclosure, a program according to a modification, and data in the storage unit 11. Note that the CPU 1100 executes the program data 1450 read from the secondary storage device 1400, but in another example, the CPU 1100 may acquire these programs from another device via the external network 1550.

### <<6. Conclusion>>

As described above, according to an embodiment of the present disclosure, the image processing apparatus 10 (corresponding to an example of the "information processing apparatus") includes the control unit 12. The control unit 12 acquires the camera image from the camera 3 whose relative position with respect to the stereoscopic display 7 is fixed. Furthermore, the control unit 12 performs the estimation process to estimate the position/orientation of the face of the user U viewing the stereoscopic display 7, on the basis of the camera image. Furthermore, the control unit 12 controls the stereoscopic display 7 to display the stereoscopic image according to the change in the position/orientation of the face of the user U. When the frequency of update of the estimation process changes, the control unit 12 changes the frequency of update of the stereoscopic display 7. This configuration enables efficient operation of the stereoscopic display 7.

Although the embodiments of the present disclosure have been described above, the technical scope of the present disclosure is not limited to the embodiments described above and various changes and alterations can be made without departing from the spirit and scope of the present disclosure. Moreover, the component elements of different embodiments and modifications may be suitably combined with each other.

Furthermore, the effects in the embodiments described herein are merely examples, the present disclosure is not limited to these effects, and other effects may also be provided.

Note that the present technology can also have the following configurations.
(1) An information processing apparatus comprising
   a control unit that
   acquires a camera image from a camera whose relative position with respect to a stereoscopic display is fixed,
   executes an estimation process to estimate a position/orientation of a face of a user viewing the stereoscopic display, based on the camera image,
   controls the stereoscopic display to display a stereoscopic image according to a change in the position/orientation of the face of the user, and
   changes a frequency of update of the stereoscopic display when a frequency of update of the estimation process changes.
(2) The information processing apparatus according to (1), wherein
   the control unit changes the frequency of update of the stereoscopic display to be equal to or less than the frequency of update of the estimation process.
(3) The information processing apparatus according to (2), wherein
   the control unit changes the frequency of update of the stereoscopic display so that the frequency of update of the stereoscopic display has a multiple relationship with the frequency of update of the estimation process.
(4) The information processing apparatus according to (3), wherein
   the control unit changes the frequency of update of the stereoscopic display so that the frequency of update of the stereoscopic display matches the frequency of update of the estimation process.
(5) The information processing apparatus according to any one of (1) to (4), wherein
   the control unit acquires IMU data that is measurement data of an IMU worn by the user, and executes the estimation process based on one or both of the camera image and the IMU data.
(6) The information processing apparatus according to (5), wherein
   the control unit reduces the frequency of update of the stereoscopic display to be equal to or less than the frequency of update of the estimation process, when transition from a state in which the estimation process is executed based on at least the IMU data to a state in which the estimation process is executed based on only the camera image causes a reduction in the frequency of update of the estimation process.
(7) The information processing apparatus according to (5) or (6), wherein
   the control unit increases the frequency of update of the stereoscopic display within a range of equal to or less than the frequency of update of the estimation process, when transition from a state in which the estimation process is executed based on only the camera image to a state in which the estimation process is executed based on at least the IMU data causes an increase in the frequency of update of the estimation process.
(8) The information processing apparatus according to any one of (1) to (7), wherein
   the control unit changes a frequency of update of the stereoscopic image when the frequency of update of the estimation process changes.
(9) The information processing apparatus according to (8), wherein
   the control unit changes the frequency of update of the stereoscopic image so that the frequency of update of the stereoscopic image matches the frequency of update of the estimation process.
(10) An information processing method comprising:
   acquiring a camera image from a camera whose relative position with respect to a stereoscopic display is fixed;
   executing an estimation process to estimate a position/orientation of a face of a user viewing the stereoscopic display, based on the camera image;
   controlling the stereoscopic display to display a stereoscopic image according to a change in the position/orientation of the face of the user; and
   changing a frequency of update of the stereoscopic display when a frequency of update of the estimation process changes.
(11) A computer-readable recording medium recording a program, the computer-readable recording medium causing a computer to execute a process by using the program including:
   acquiring a camera image from a camera whose relative position with respect to a stereoscopic display is fixed;
   executing an estimation process to estimate a position/orientation of a face of a user viewing the stereoscopic display, based on the camera image;
   controlling the stereoscopic display to display a stereoscopic image according to a change in the position/orientation of the face of the user; and
   changing a frequency of update of the stereoscopic display when a frequency of update of the estimation process changes.

### Reference Signs List

3 CAMERA
5 IMU
7 STEREOSCOPIC DISPLAY
10 IMAGE PROCESSING APPARATUS
11 STORAGE UNIT
11a ESTIMATION MODEL
11b CONTENT DATA
11c REFRESH RATE INFORMATION
12 CONTROL UNIT
12a ACQUISITION UNIT
12b POSITION/ORIENTATION ESTIMATION UNIT
12c DISPLAY CONTROL UNIT
12d OPERATION CONTROL UNIT
FV ANGLE OF VIEW
R DISTANCE MEASUREMENT POINT
U USER

## Claims

1. An information processing apparatus comprising
a control unit that
acquires a camera image from a camera whose relative position with respect to a stereoscopic display is fixed,
executes an estimation process to estimate a position/orientation of a face of a user viewing the stereoscopic display, based on the camera image,
controls the stereoscopic display to display a stereoscopic image according to a change in the position/orientation of the face of the user, and
changes a frequency of update of the stereoscopic display when a frequency of update of the estimation process changes.

2. The information processing apparatus according to claim 1, wherein
the control unit changes the frequency of update of the stereoscopic display to be equal to or less than the frequency of update of the estimation process.

3. The information processing apparatus according to claim 2, wherein
the control unit changes the frequency of update of the stereoscopic display so that the frequency of update of the stereoscopic display has a multiple relationship with the frequency of update of the estimation process.

4. The information processing apparatus according to claim 3, wherein
the control unit changes the frequency of update of the stereoscopic display so that the frequency of update of the stereoscopic display matches the frequency of update of the estimation process.

5. The information processing apparatus according to claim 1, wherein
the control unit acquires IMU data that is measurement data of an IMU worn by the user, and executes the estimation process based on one or both of the camera image and the IMU data.

6. The information processing apparatus according to claim 5, wherein
the control unit reduces the frequency of update of the stereoscopic display to be equal to or less than the frequency of update of the estimation process, when transition from a state in which the estimation process is executed based on at least the IMU data to a state in which the estimation process is executed based on only the camera image causes a reduction in the frequency of update of the estimation process.

7. The information processing apparatus according to claim 5, wherein
the control unit increases the frequency of update of the stereoscopic display within a range of equal to or less than the frequency of update of the estimation process, when transition from a state in which the estimation process is executed based on only the camera image to a state in which the estimation process is executed based on at least the IMU data causes an increase in the frequency of update of the estimation process.

8. The information processing apparatus according to claim 1, wherein
the control unit changes a frequency of update of the stereoscopic image when the frequency of update of the estimation process changes.

9. The information processing apparatus according to claim 8, wherein
the control unit changes the frequency of update of the stereoscopic image so that the frequency of update of the stereoscopic image matches the frequency of update of the estimation process.

10. An information processing method comprising:
acquiring a camera image from a camera whose relative position with respect to a stereoscopic display is fixed;
executing an estimation process to estimate a position/orientation of a face of a user viewing the stereoscopic display, based on the camera image;
controlling the stereoscopic display to display a stereoscopic image according to a change in the position/orientation of the face of the user; and
changing a frequency of update of the stereoscopic display when a frequency of update of the estimation process changes.
